# EUROPEAN PATENT SPECIFICATION

(11) **EP 1 997 022 B1**
(45) Date of publication and mention of the grant of the patent: **23.07.2014**
(21) Application number: 07758949.7
(22) Date of filing: 20.03.2007
(51) Int. Cl.: G06F 15/16, G06F 15/173, H04L 12/58, G06Q 10/00

(54) **SYNCHRONOUS MESSAGE MANAGEMENT SYSTEM**
SYNCHRONES NACHRICHTENVERWALTUNGSSYSTEM
SYSTÈME DE GESTION DE MESSAGES SYNCHRONES

(30) Priority: 20.03.2006 US 277017; 09.08.2006 US 821957 P; 20.12.2006 US 871074 P
(43) Date of publication of application: 03.12.2008
(73) Proprietor: Google Inc., Mountain View, CA 94043 (US)
(72) Inventor: LUND, Peter K., Mountain View, CA 94043 (US); WOODS, Donald R., Mountain View , CA 94043 (US); ROXBOROUGH, Ian T., Mountain View, CA 94043 (US); LAM, Byron S., Mountain View, CA 94043 (US); DAWES, Adam S., Mountain View, CA 94043 (US); PETRY, Scott M., Mountain View, CA 94043 (US)
(74) Representative: Qip Patentanwälte Dr. Kuehn & Partner mbB
(86) International application number: PCT/US2007/064448
(87) International publication number: WO 2007/109691

(56) References cited:
- WO-A2-2005/121991
- US-A1- 2003 158 905
- US-A1- 2004 068 574
- US-A1- 2006 015 563
- US-A1- 2006 015 563
- US-B2- 6 941 348
- US-B2- 6 941 348

## Description

### CROSS-REFERENCE TO RELATED APPLICATIONS

This application claims priority to U.S. provisional patent application no. 60/821,957, filed August 9, 2006, and U.S. provisional patent application no. 60/871,074, filed December 20, 2006, both of which are commonly assigned with the present application. This application also claims priority to U.S. utility application no. 11/277,017, filed March 20, 2006, which is commonly assigned with the present application.

### TECHNICAL FIELD

Disclosed embodiments herein relate generally to systems for monitoring and managing electronic communications, and more particularly to systems and methods for a managing synchronous messages sent between client users and other messaging parties.

### BACKGROUND

Synchronous message management is commonly handled by synchronous message service providers (Yahoo!, AOL, MSN, and Google) that have users/subscribers and by companies that deploy synchronous message services within enterprise networks. When synchronous message management is performed by the message service provider, or by a client at the company server location, valuable communications bandwidth and computing resources are expended on routing, analyzing, and other handling of synchronous message traffic. Present synchronous message systems are further characterized by a lack of real-time monitoring, feedback, and updating of rules, usage or other policies regarding such traffic. A need therefore exists for an improved system for managing synchronous messages.

WO 2005/121991 discloses a personal messaging proxy deployed as a component in an instant messaging system logically positioned between a user and the user's service provider (see paragraph [0013]). Multiple users require multiple proxy deployments.

US 2003/158905 discloses an electronic message management system for managing the transmission of electronic messages from sending mail servers to receiving mail servers.

WO 2004/088943 relates to identifying and maintaining lists of a computer-user's electronic communication partners. Identification is made based on the partners' inclusion in the computer-user's contact lists and on the computer-user's inclusion in the partners' contact lists.

### SUMMARY

According to a first aspect of the present invention there is provided a method as claimed in claim 1.

An improved system for managing synchronous messages between messaging parties is disclosed herein. According to certain described embodiments, a centralized synchronous message management system is provided as a subscription service to various clients without the need for installation of additional equipment at the client's location. The synchronous message management system is connected to the various client networks, messaging service servers, and third party messengers through a public network, such as, for example, the Internet. According to this embodiment, all incoming and outgoing synchronous messages are directed through the synchronous message management system. By doing this, the messages can be processed in real time by the synchronous message management system.

This real-time processing can include the application of various policies to the users and clients that subscribe to the synchronous message management services. These policies can regulate the level of synchronous messaging activity permitted by various users and clients of the system. The real-time processing can also examine the metadata and the actual content associated with the synchronous message to determine if the message should be blocked as unsolicited or undesirable ("spim"). Because a large number of clients networks can be connected to the synchronous message management system, the system is operable to collect a large amount of empirical data on synchronous messaging traffic on the Internet. According to described embodiments, the collected traffic data can be used to generate scoring algorithms that assign a particular reputation score to a message based upon the likelihood that the synchronous message is unsolicited or undesirable. These reputation scores can be used to filter synchronous messages received by the synchronous message management system in real time.

According to embodiments described herein, the synchronous message management system can store policy information on behalf of a enterprise messaging system that resides entirely within a client network. In these embodiments, synchronous messages may be sent within a particular client network without passing through the synchronous message management system. To apply policies to these messages, the enterprise messaging system retrieves policies from the synchronous message management system and applies those policies to the messaging activities in real time. The synchronous message management system thereby allows policies to be applied to an existing enterprise messaging system without the installation of any new appliances or hardware at the client location.

As described herein, the synchronous message management system can act as a clearinghouse for the transmission of synchronous messages between various enterprise messaging systems that are located within client networks. These various synchronous messaging systems can therefore be federated together for inter-client messaging. The synchronous message management system can apply various federation policies, which may permit various levels of inter-client messaging.

According to a second aspect of the present invention there is provided a system as claimed in claim 8.

The foregoing has outlined and summarized various disclosed embodiments. Additional features and embodiments are described hereinafter and may be set forth specifically in one or more of the claims included below.

### BRIEF DESCRIPTION OF THE DRAWINGS

Embodiments are illustrated by way of example in the accompanying figures, in which like reference numbers indicate similar parts, and in which:
**FIGURE 1** is a block diagram of an exemplary system for managing synchronous messages between client users and other messaging parties suitable for use with one or more of the disclosed embodiments;
**FIGURE 2** is a block diagram depicting a database associated with a message processing system suitable for use with one or more of the disclosed embodiments;
**FIGURE 3** is a process flow diagram depicting a representative process for registering a new user with a message processing system according to one embodiment;
**FIGURE 4** is a process flow diagram depicting a representative process for activating a client terminal for synchronous messaging according to one embodiment;
**FIGURE 4A** is a process flow diagram depicting a representative process for activating a client terminal in an enterprise messaging system network for synchronous messaging according to one embodiment;
**FIGURE 5** is a process flow diagram depicting a representative process for applying policies to a synchronous messaging event according to one embodiment;
**FIGURE 5A** is a process flow diagram depicting a representative process for screening the content of a synchronous messaging event according to one embodiment;
**FIGURE 6** is a process flow diagram depicting a representative process for activating a third-party user for synchronous messaging according to one embodiment;
**FIGURE 7** is a process flow diagram depicting a representative process for providing outgoing synchronous messages from a client terminal according to one embodiment;
**FIGURE 7A** is a process flow diagram depicting a representative process for providing outgoing synchronous messages from a terminal in an enterprise messaging system according to one embodiment;
**FIGURE 8** is a process flow diagram depicting a representative process for receiving incoming synchronous messages from a third-party user according to one embodiment;
**FIGURE 8A** is a process flow diagram depicting a representative process for receiving incoming synchronous messages from third-party user in an enterprise messaging system according to one embodiment; and
**FIGURE 9** is a process flow diagram depicting a representative process for providing synchronous messages between federated enterprise messaging systems according to one embodiment.

### DETAILED DESCRIPTION

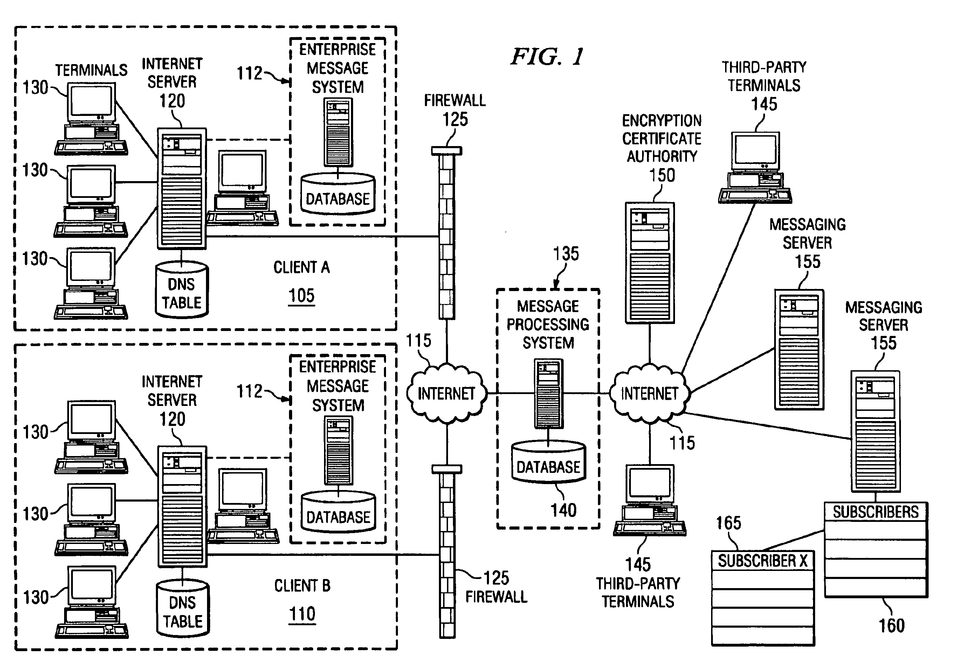

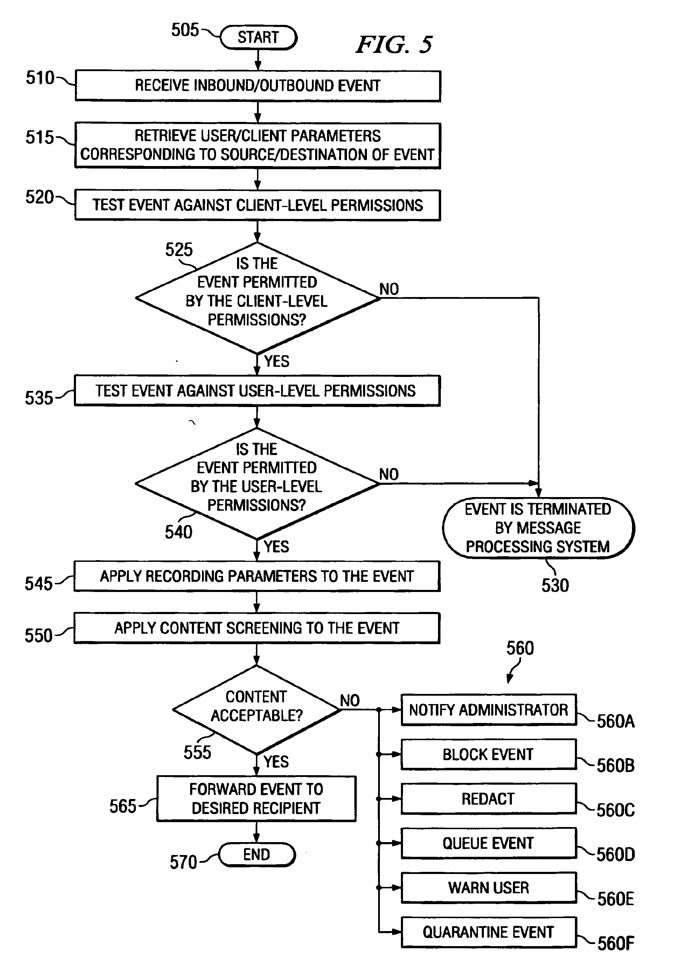

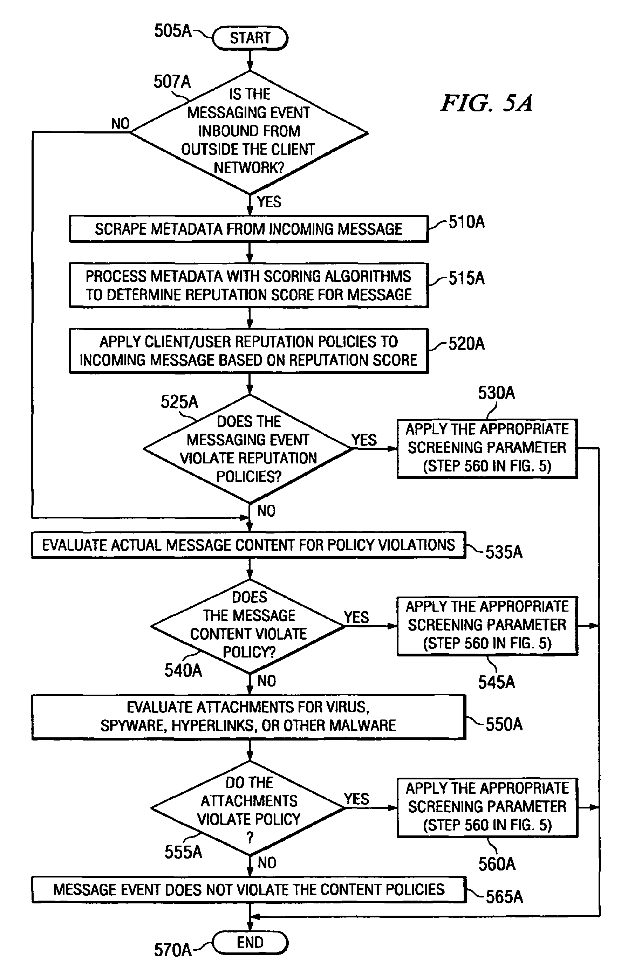

Disclosed in the present application are specific embodiments of a synchronous message processing system 135, and methods operating on and with the message processing system 135, designed to process synchronous messages, such as instant messages, VOIP, or file sharing applications. A block diagram depicting the layout of a representative system for managing synchronous messaging is depicted in **FIGURE 1****.** Depicted in Fig. 1 is a message processing system 135 that is similar in concept to the Postini® Electronic Message Management System that is described in U.S. Patent No. 6,941,348. The message processing system can be connected to one or more clients 105, 110 through the Internet 115. Each client is connected to the Internet 115 through an Internet server 120 and a firewall 125. A plurality of terminals 130 can be connected to each Internet server 120 for communication with the Internet 115. The message processing system 135 is also connected to a database 140 in which a variety of data corresponding to the clients 105, 110 and users are stored. Also stored in the database 140 are metadata corresponding to messaging traffic passing through the message processing system 135. According to one embodiment, the message processing system 135 monitors messaging data for a large number of clients. As a result, the message processing system 135 collects large amounts of empirical data regarding messaging traffic. This data can include the source IP address for a message, its destination IP address, the source screen name, the destination screen name, embedded hyperlinks, and attachment information. The message processing system 135 can utilize this information, along with other collected information, to generate reputation scores corresponding to a particular message. The process for generating reputation scores is described in more detail in U.S. Patent No. 6,941,348. These reputation scores can then be used to withhold, quarantine, or delete a particular message, or take other disposition actions related to the message, depending upon the particular
parameters assigned to a client or user. The process for evaluating synchronous messages with reputation scores is described in more detail below with reference to Fig. 5A.

As shown in Fig. 1, the message processing system 135 is also connected to third-party terminals 145, an encryption certificate authority 150, and at least one messaging server 155 through the Internet 115. The messaging server 155 is the central server on which a particular messaging protocol (e.g., Yahoo, Microsoft Network (MSN), AOL, Google Chat) is executed. Or, as an alternative, the messaging server 155 can manage voice communications (e.g., using a VOIP protocol), video content, or file-sharing applications. The messaging server 155 maintains a list of subscribers 160 that subscribe to the messaging service. Each subscriber is assigned a list of parameters 165 that are stored in the messaging server 155, including the current IP address of the subscriber, a list of contacts (e.g., a "buddy" or "contact" list) who also subscribe to the service, and "on-line" notification parameters.

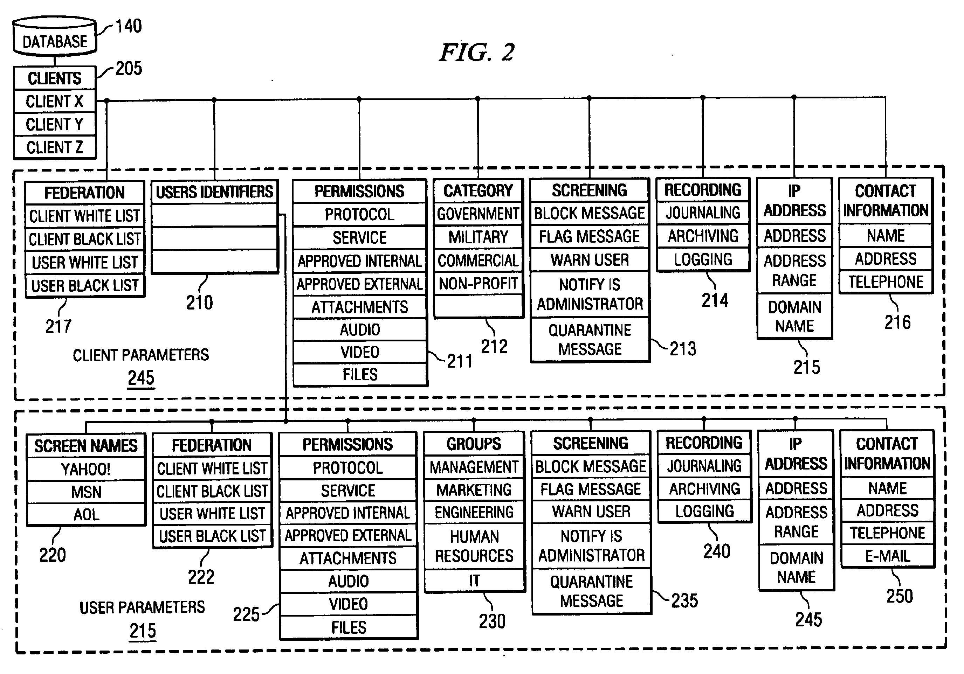

A more detailed view of the tables, fields, and data stored in the message processing system database 140 is depicted in **FIGURE 2****.** The message processing system database 140 maintains, among other things, a list of clients 205 that subscribe to message management services. This list of clients preferably refers to a list of organizations or groups, rather than individuals, that subscribe to message management services. Each client is assigned various parameters 245, including client-level permissions 211, the general category of the client 212, screening parameters 213 that identify what should be done with problem messages, recording parameters 214 that describe whether and how messages should be recorded, IP addresses 215 that describe the address, address range, or domain names associated with the client, and other contact information 216 for the client. A list of user identifiers 210 can also be associated with each client in the client list 205. Each of these user identifiers 210 uniquely identifies the user, regardless of which messaging protocol is utilized by the user. A list of federation properties 217 can also be associated with each client. The federation properties 217 are used when a client implements a enterprise messaging system, rather than a public messaging protocol. The federation properties identify which clients and users outside of the client network can communicate with users inside the enterprise messaging system.

Each user in the user identifier list 210 is also assigned a variety of user-level parameters 215. These user parameters include the screen names 220 associated with the various messaging protocols (e.g., Yahoo, MSN, AOL, Google, etc.), a list of federation properties 222 corresponding to a particular user, a list of user-level permissions 225, the general category or grouping of the user 230, screening parameters 235 that identify what should be done with problem messages, recording parameters 240 that describe whether and how messages should be recorded, IP addresses 245 that describe the address, address range, or domain names associated with the user, and other contact information 250 for the user.

The client-level permissions 211 and the user-level permissions 225 both include permissions related to the sending and receiving of text messages, the messaging protocol used, the messaging service used, whether internal and/or external messages are permitted, attachments to the messages, audio (e.g., VOIP), video, hyperlinks, and other files. The client-level parameters 245 also include a variety of categories 212, such as whether the client is a government entity, military entity, commercial entity, or non-profit entity. The user-level parameters also include various groups found within a particular client, including, for example, management, marketing, engineering, human resources, and IT. These categories and groups can be associated with the various permissions to further customize the permissions associated with a client/user. A variety of screening parameters 213, 235 are also associated with each client/user. These screening parameters define what to do with messages that are identified as being in violation of a policy or otherwise problematic. Possible options for dealing with the problem message include blocking the message from delivery, delivering the message, but flagging it as a potential violation, warning the user about a policy violation, notifying an IS administrator of the violation, and quarantining the message until it can be evaluated by an appropriate individual. Recording parameters 214, 240 are also available for each client/user. These parameters indicate whether messages should be journaled, archived, or logged. Journaled messages are recorded in text form and then sent to the communicating parties by e-mail. Archived messages are recorded in their native format, but are stored in a repository at the message processing system 135 or other appropriate location. Logging of messages means that data corresponding to messaging activity (date stamps, who sent, who received, etc.) is recorded and stored in a repository at the message processing system 135 or other appropriate location. These features can allow clients to comply with various data retention policies set by the client. In a voice or VOIP application, the user-level parameters can include a telephone number corresponding to an individual user. Further, these voice applications can be journaled or archived in their respective native formats. The client and user parameters can also include IP address information 215, 245, such as the precise IP address of the client/user, a range of acceptable IP addresses, or the domain name of the client/user. Contact information 216, 250, such as the name, address, telephone number, and e-mail address of a client/user can also be stored in the client/user parameters. Lastly, the screen names (220) associated with a particular user can be stored in the user parameters 215. Each user may have a variety of screen names, depending upon the different services and protocols to which the user subscribes.

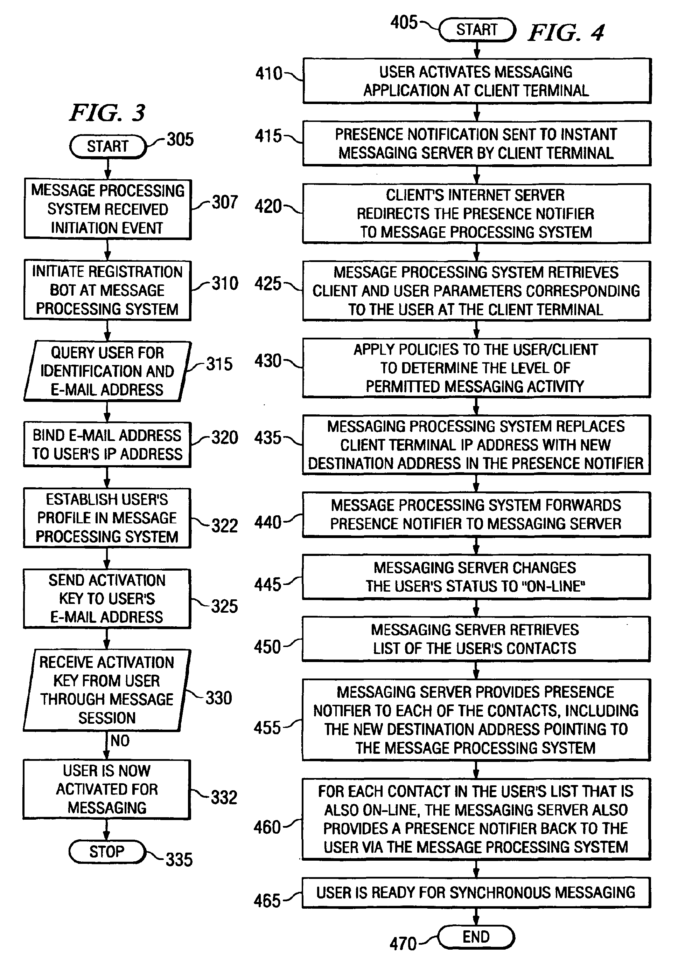

Prior to using a synchronous messaging system, new users may establish an account with the message processing system 135. This can be done automatically by an IS department for all users in an organization or group, or on an ad-hoc basis as various users utilize the messaging service. A flowchart demonstrating a representative registration process for new users on a message processing system 135 is depicted in FIGURE 3. The process starts (305) when the message processing system 135 receives an initiation event (307). This initiation event can be any of a variety of events such as, receiving a presence notifier at the message processing system 135, receiving an inbound or outbound message at the message processing system 135, receiving a direct request from a user to activate the registration process, or receiving a direct registration request from an IS administrator for a particular client. Upon receiving an initiation event, a registration process (e.g., a registration bot) is initiated at the message processing system 135 (310). This registration bot can be a software application executed on the message processing system 135 that communicates directly with the user at the user's terminal. The registration bot asks the user for identification and an e-mail address corresponding to that user (315). This information is provided directly from the user to the message processing system 135. Next the registration bot binds the e-mail address to the user's IP address and stores this information in the database of the message processing system 135(320).

The message processing system 135 uses the identification and e-mail address to establish a user's profile (322). The user may be also prompted to adjust the various client and user parameters in the message processing system 135 corresponding to that client. Of course, in other applications, a default set of parameters may be assigned to all new users of the system. According to another embodiment, only certain users will have the ability to modify their parameters and permissions. After the appropriate client and user parameters have been assigned to the new user, an activation key is sent to the user's e-mail address (325). Other methods for providing the activation key can be used, such as text messaging, telephone calls, and regular mail. Upon receiving this activation key, the user provides it back to the message processing system 135 through a message session (330). Other techniques can also be used to verify the identity of the user, such as a secure website. At this point, the user may be approved for messaging by the message processing system 135 (332). After these steps, the registration process for a new user is complete (335).

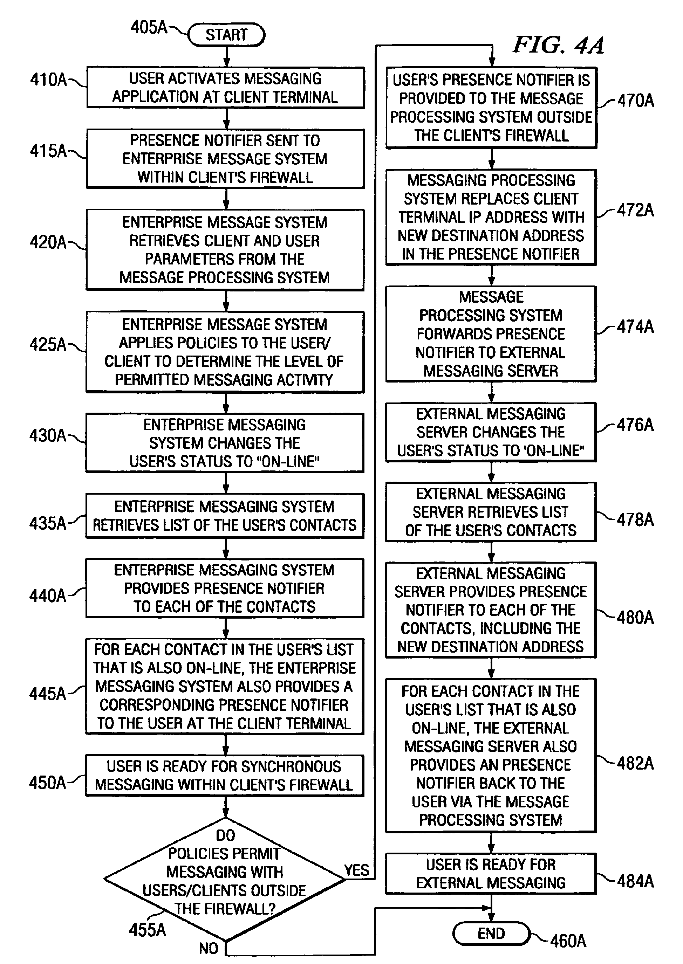

After registration, a user may activate a synchronous messaging application at a client terminal 130 in order to engage in messaging activities. A flowchart corresponding to a representative client terminal activation process is depicted in **FIGURE 4****.** The process starts (405) when a user activates a messaging application at a client terminal (410). Upon activation, the messaging application sends a presence notifier to the instant messaging server 155 from the client terminal 130 (415). This presence notifier first arrives at the client's Internet server 120 where it is redirected to the message processing system 135 (420). The message processing system 135 receives the presence notifier and retrieves the corresponding client / user parameters from the database 140 (425). The message processing system 135 then applies the policies to the user/client to determine the level of messaging activity that is permitted for that client/user (430). These policies can include any of the permissions, recording, and federation parameters previously identified in Fig. 2. The application of policies to a messaging event, such as a receipt of a presence notifier by the message processing system 135, is further described below with reference to Fig. 5. If it is determined that the client / user has sufficient permission to utilize the messaging application, the message processing system 135 replaces the client terminal IP address with a new destination address in the presence notifier (435). According to one embodiment, the client terminal IP address is replaced with the IP address of the message processing system 135 so that all synchronous messages sent to or from the user will pass through the message processing system 135. After replacing this IP address, the message processing system 135 forwards the presence notifier to the appropriate messaging server 155 (440) through the Internet 115. Upon receiving the presence notifier, the messaging server 155 first changes the subscriber's status to "online" (445). The messaging server 155 next retrieves the list of the user's contacts from the subscriber parameters 165 in the messaging server 155 (450). After this, the messaging server 155 provides a presence notifier to each of the user's contacts (375) through the Internet 115. This presence notifier includes the new destination address that points to the message processing system 135 rather than the client terminal 130 so that all synchronous messages for the user will be routed through the message processing system 135. Further, for each contact in the user's list that is also "online", the messaging server 155 also provides a presence notifier back to the user at the client terminal via the message processing system 135 (460). At this point, the user is ready for synchronous messaging with one of the contacts that is also "online" (465). The client terminal activation process is therefore complete (470).

As mentioned previously with reference to Fig. 1, the synchronous message processing system can be implemented to work with a client that utilizes an enterprise messaging system 112. In such an arrangement, intra-client synchronous messages stay within the confines of the client firewall 125 and do not pass through the message processing system 135. Although intra-client messages are not sent outside of the client network, messaging activities can still be completed with third-party messagers through the messaging server 155.

A representative process by which a client terminal can be activated for use with an enterprise messaging system is depicted in **FIGURE 4A****.** The process starts (405A) when a user activates a messaging application at a client terminal 130 within a client network that utilizes an enterprise messaging system 112 (410A). A presence notifier is first sent to the enterprise messaging system 112 within the client's firewall 125 (415A). The enterprise messaging system 112 retrieves the client and user parameters corresponding to the user at the client terminal 130 from the message processing system 135 (420A). According to one embodiment, the client and user parameters may also be stored in a database associated with the enterprise messaging system 112. Next, the enterprise messaging system 112 applies the policies to the user/client to determine the permitted level of messaging activity (425A). A representative process for applying policies is depicted in Fig. 5. If the policies permit messaging activity, then the enterprise messaging system 112 changes the user's status to "on-line" (430A) and retrieves the list of the user's contacts contained within the enterprise messaging system (435A). If the policies do not permit synchronous messaging by the user, then the activation process is terminated. The enterprise messaging system 112 next provides a presence notifier to each of the contacts retrieved from the database in the enterprise messaging system 112 (440A). As this list of users was retrieved from the enterprise messaging system 112 in the client network, the presence notfiers will generally be sent to users within the client network. In addition, for each contact in the user's list that is also on-line, the enterprise messaging system provides a corresponding presence notifier back to the user at the client terminal (445A). Once the presence notifier has been provided from the enterprise messaging system 112, the user is ready for synchronous messaging within the client's firewall (450A).

As further shown in Fig. 4A, if the client / user parameters permit messaging with users / clients outside of the client firewall 125, then additional steps are used to activate external messaging. If, however, messaging with clients/users outside the firewall is not permitted (455A), then the client terminal activation process is terminated (460A). To activate external messaging for the client, then the user's presence notifier is provided by the enterprise messaging system 112 to the message processing system 135 outside the client's firewall 125 (470A). The message processing system 135 replaces the client terminal IP address with a new destination address, preferably the address of the message processing system 135 itself (472A). In this manner, synchronous messages to and from the user at the client terminal 130 will be routed through the message processing system 135. After replacing the address, the message processing system 135 forwards the presence notifier to an external messaging server 155 (474A).

Still referring to Fig. 4A, upon receipt of the presence notifier, the external messaging server 155 changes the user status to "on-line" (476A). Next, the external messaging server 155 retrieves a list of the user's contacts from its internal database 165 (478A). The external messaging server 155 then provides presence notifiers to each of the contacts in the user's list (480A). In addition, for each contact in the user's list that is also indicated as "on-line" in the external messaging server 155, the external messaging server also provides a presence notifier back to the user at the client terminal 130 via the message processing system 135 (482A). At this point, the user at the client terminal is ready for external messaging with a third party user located outside of the client's firewall (484A). This completes the client terminal activation process for an enterprise messaging system (460A).

As mentioned previously, policies can be applied to a variety of messaging events, including, for example, the receipt of an outbound presence notifier, the receipt of an inbound presence notifier, the receipt of an incoming synchronous message, or the receipt of an outbound synchronous message. Accordingly, a flowchart illustrating a representative process in which policies are applied to a particular messaging event is depicted in FIGURE 5. The process starts (505) when an inbound or outbound messaging event is received by the message processing system (510). Although Fig. 5 and the following description makes reference to the receipt and processing of messaging events by the message processing system 135, the event can also be received and processed by an enterprise messaging system 112. Upon receiving an inbound or outbound messaging event, the message processing system 135 retrieves the client/user parameters corresponding to the source and/or destination of the messaging events (515). After this, the message processing system 135 tests the messaging event against the client-level permissions (520). If the event is not permitted by the client-level permissions (525) then the event may be terminated by the message processing system 135 (530). If the client-level permissions permit the messaging event, then the message processing system next tests the event against the user-level permissions (535). If the messaging event is not permitted by the user-level permissions (540), then the event is terminated by the message processing system 135 (530). If the event is permitted by the user-level permissions, then the message processing system 135 next applies the recording parameters to the event (545). As mentioned previously, these recording parameters can include journaling, archiving or logging of the messaging event. Next, the message processing system applies content screening to the event (550). The process of screening a message for content is described in more below with reference to Fig. 5A If the content is not acceptable (555), then one of the screening parameters is applied to the message (560). These screening parameters include notifying an administrator of the message (560A), blocking the messaging event (560B), redacting the event (560C), queuing the event (560D), warning the user (560E), and quarantining the messaging event (560F). If the content screening process determines that the message content is acceptable, then the message will be forwarded to the desired recipient (565). At this point, the process of applying policies to a messaging event is complete (570). It should be noted that the process of testing permissions, applying recording parameters, and applying content screening can be performed in any order, not just the order depicted in Fig. 5.

A representative process for screening the content of a messaging event is depicted in FIGURE 5A, and is described below. The content screening process starts (505A) by determining if the messaging event is inbound from outside the client network (507A). If the messaging event is inbound, then the following reputation scoring steps may be performed. First, metadata is scraped from the incoming message (510A). This metadata may include an IP address corresponding to the source or destination of the message and screen names corresponding to the sender or receiver of the message. This metadata is processed with certain scoring algorithms to determine the reputation score for the message event (515A). The processing of the metadata can be performed by either a message processing system 135 or by an enterprise messaging system 112, depending upon the particular configuration of the synchronous messaging system. After a reputation score has been calculated, a client/user reputation policies are applied to the incoming messaging event based upon the reputation score (520A). If the messaging event violates the reputation policies (525A), then appropriate screening parameters will be applied to the messaging event (530A) as described in step 560 in Fig. 5. If the messaging event does not violate reputation policies, the actual message content is next evaluated for policy violations (535A).

Still referring to Fig. 5A, testing the actual message content comprises evaluating the text of a particular text message, evaluating the hyperlinks contained within an actual text message, or applying other qualitative tests to the message content to determine if it violates a particular policy. If the message content does violate a policy (540A), then appropriate screening parameters will be applied to the messaging event (545A) as indicated in step 560 of Fig. 5. If the message content does not violate the policy, then the attachments are evaluated for other policy violations such as virus, Spyware, inappropriate hyperlinks, or other Malware (550A). If the attachments violate the policy (555A), then appropriate screening parameters will be applied to the message (560A) as indicated in step 560 in Fig. 5. If the attachments do not violate policy, then the messaging event does not violate any of the content policies and may be forwarded to the destination user (565A). At this point, the content screening process is complete (570A).

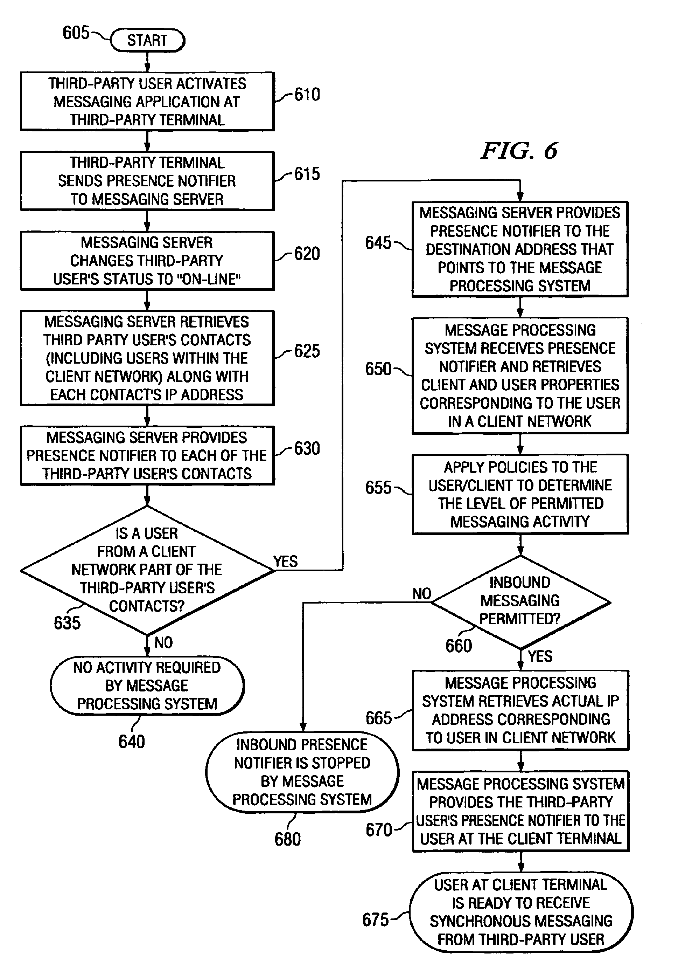

A flowchart corresponding to the process by which a third-party can activate a terminal for synchronous messaging is depicted in **FIGURE 6****.** The process starts (605) when a third-party user activates a messaging application at a third-party terminal 145 (610). Upon activation of the messaging application at the third-party terminal 145, a presence notifier is sent to the messaging server 155 through the Internet 115 (615). The messaging server 155 changes the third-party user status to "online" (620). The messaging server 155 then retrieves the designated contacts for that third-party user from the messaging server database (625). These contacts can include users from within a client network. After this, the messaging server 155 provides a presence notifier to each of the third-party user's contacts (630). If no users from a client network are part of the third-party user's contacts (635), then no activity will be required by the message processing system 135 (640). On the other hand, if a user from a client network is part of the third-party user's contacts, the messaging server 155 provides the presence notifier to the destination address corresponding to the message processing system 135 (645). Upon receiving the presence notifier, the message processing system 135 retrieves the client / user properties corresponding to the destination user in the client network (650). Next, the message processing system 135 applies policies to determine the level of permitted messaging activity by the user (655). A representative process for applying policies to messaging events is depicted in Fig. 5. If messaging is permitted (660), then the message processing system 135 retrieves the actual IP address corresponding to the destination user in the client network (665). After this, the message processing system 135 provides the third-party user's presence notifier to the user at the client terminal (670). At this point, the user at the client terminal 130 is ready to engage in synchronous messaging with a third-party user (675). If, however, external messaging is not permitted by the client/user policies, then the inbound presence notifier is stopped by the message processing system 135 (680).

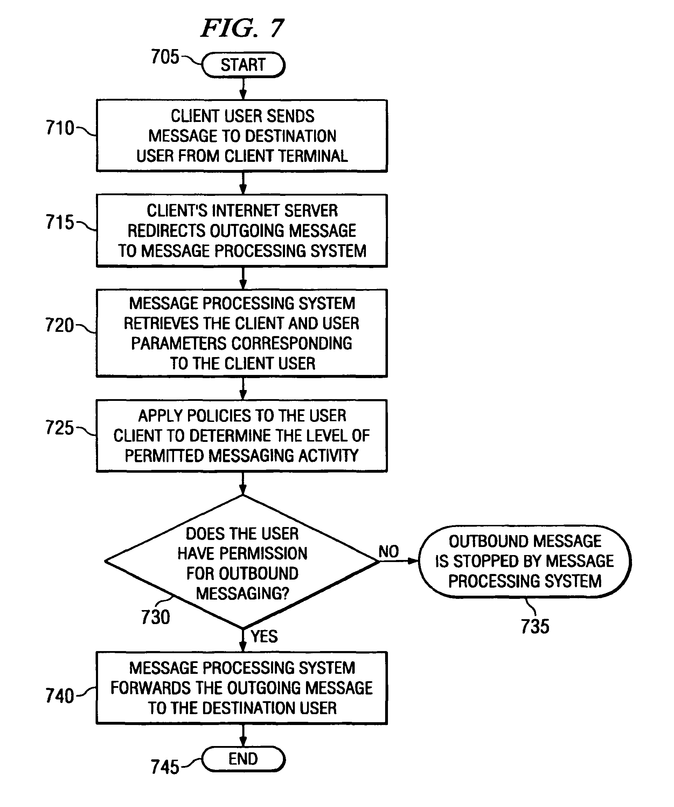

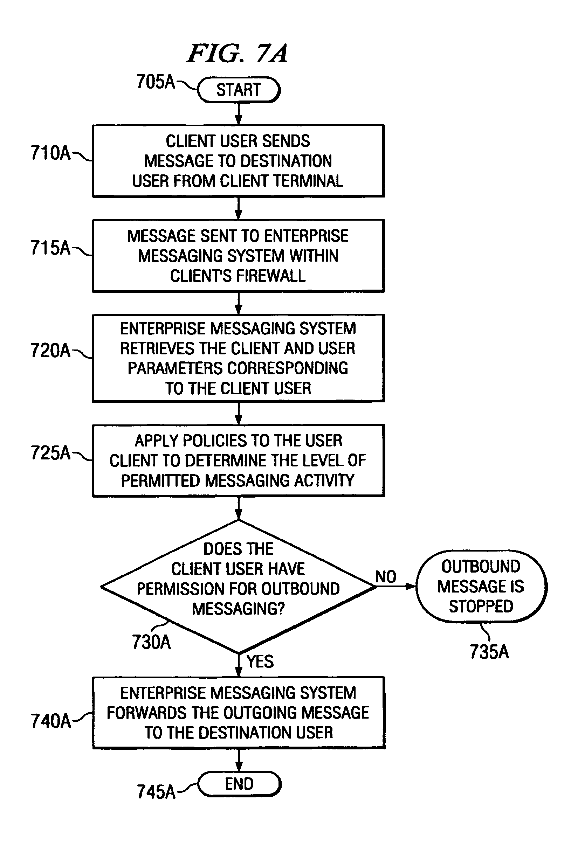

A representative process for sending an outgoing message in a client network is depicted in **FIGURE 7****.** The process starts (705) when a user in a client network sends a synchronous message to another user from a client terminal 130 (710). The outgoing message is first sent to the client's Internet server 120 which redirects the outgoing message to the message processing system 135 (715). Upon receiving the outgoing message, the message processing system 135 retrieves the client and user parameters corresponding to the sending user (720). If the destination user is also a subscriber to the message processing system 135, then the destination user's parameters may also be retrieved. Next, the message processing system 135 applies the policies to determine the level of permitted messaging activity by the client user (725). This step may include some or all of the policy testing and content screening processes described in Figs. 5 and 5A. If the source user or destination user does not have permission for the synchronous message (730), then the message is stopped by the message processing system 135 (735). On the other hand, if the users have sufficient permission for outbound messaging, then the message processing system forwards the outgoing message to the destination user (740). At this point, the outgoing message process is complete (745).

A flowchart corresponding to a representative process in which an outgoing message is sent from a user of an enterprise messaging system is depicted in **FIGURE 7A****.** The process starts (705A) when a user located within a client network sends a message to a destination user from a client terminal (710A). The message is first sent to the enterprise messaging system 112 within the client's firewall 125 (715A). Upon receiving the message, the enterprise messaging system 112 retrieves the client and user parameters corresponding to the client/user (720A). This may be done from the message processing system 135, or from a database in the enterprise messaging system 112. The enterprise messaging system 112 next applies policies to the user to determine the level of permitted messaging activity (725A). This step may include some or all of the policy testing and content screening processes described in Figs. 5 and 5A. If the user does not have permission for outbound messaging (730A), then the outbound message is stopped by the enterprise messaging system (735A). If, however, the user does have permission for outbound messaging and the message does not violate any policies, then the enterprise messaging system 112 forwards the outgoing message to the destination user (740A). At this point, the outgoing message process for a client/user within an enterprise messaging system is complete (745A).

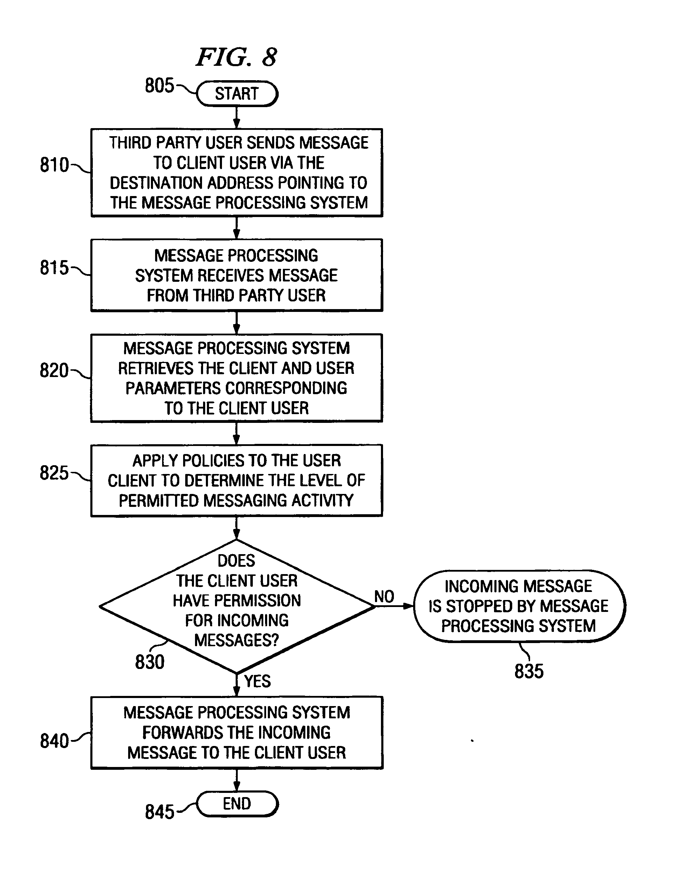

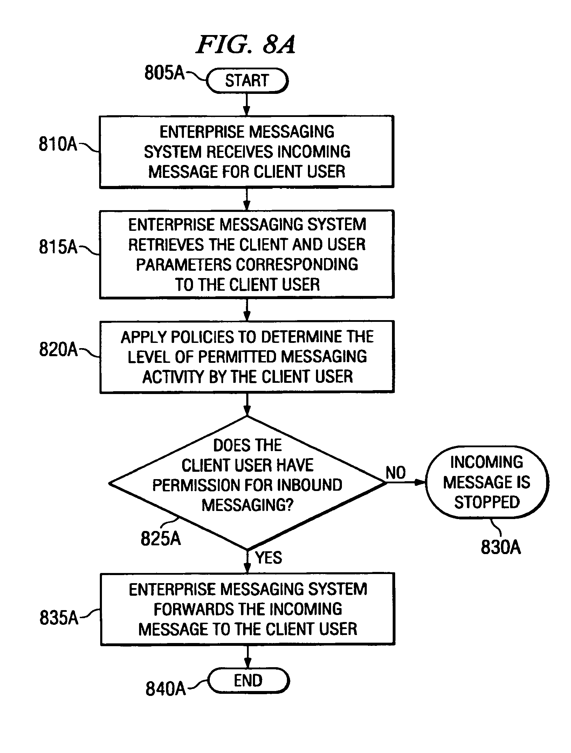

A representative process for processing an incoming message according to another embodiment is depicted in **FIGURE 8****.** The process starts (805) when a third-party user sends a synchronous message to a client user at a client terminal 130 (810). Since the destination address of the client user was replaced with an address corresponding to the message processing system 135, the message will be delivered to the message processing system 135 rather than directly to the client user. Upon receiving the incoming message (815), the message processing system 135 retrieves the client and user parameters corresponding to the client user (820). Next, the message processing system 135 applies the policies to the message to determine the level of permitted messaging activity (825). This step may include some or all of the policy testing and content screening processes described in Figs. 5 and 5A. If the client user does not have sufficient permission to receive an incoming message, or if the inbound message violates the content policy (830), the incoming synchronous message is stopped by the message processing system 135 (835). On the other hand, if the incoming message is approved, then the message processing system will forward the incoming message to the IP address corresponding to the user's client terminal 130 (840). At this point, the incoming message process is complete (845).

A flowchart corresponding to a representative process by which incoming messages are processed by an enterprise messaging system 112 is depicted in **FIGURE 8A****.** The process starts (805A) when the enterprise messaging system 112 receives an incoming message for a client/user within the enterprise messaging network (810A). The enterprise messaging system 112 first retrieves the client and user parameters corresponding to the destination user from the message processing system 135 (815A). As mentioned previously, these parameters may be stored in the message processing system 135, or in a database in the enterprise messaging system 112. Next, the enterprise messaging system 112 applies policies to the destination client/user to determine the level of permitted messaging activity (820A). This step may include some or all of the policy testing and content screening processes described in Figs. 5 and 5A. If the client/user does not have sufficient permission for inbound messaging, or if the inbound message violates the content policies (825A), the incoming message is stopped by the enterprise messaging system 112 (830A). If, however, the client/user does have permission for inbound messaging and the incoming message does not violate the content policies, then the enterprise messaging system 112 will forward the incoming message to the user at the client terminal 130 (835A). At this point, the incoming message process for an enterprise messaging system 112 is complete (840A).

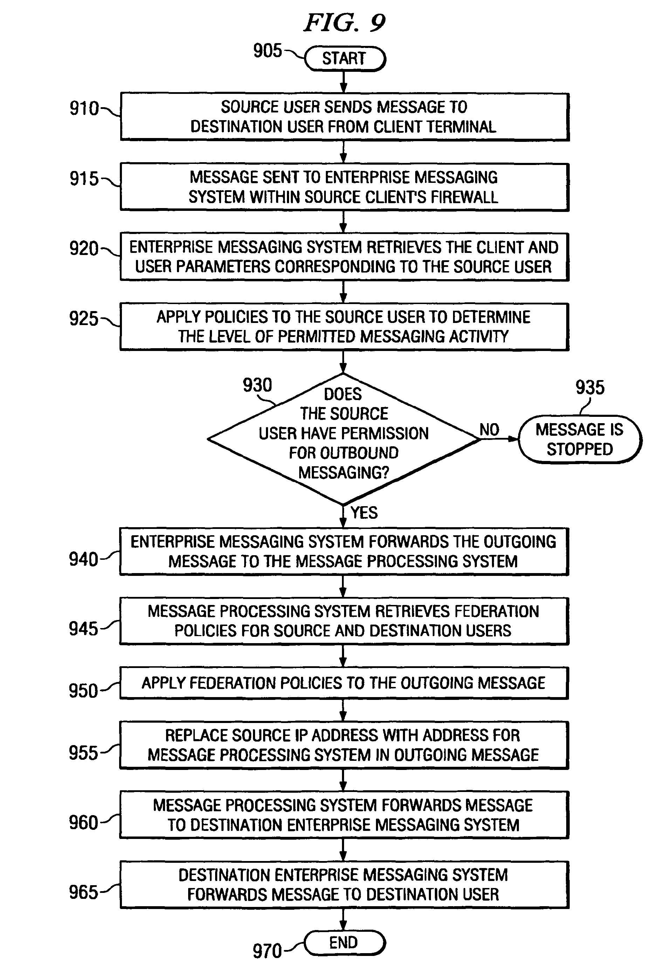

A flowchart corresponding to a representative process by which messages can be passed between federated enterprise messaging system 112 is depicted in **FIGURE 9****.** As mentioned previously, with reference to Fig 1, client A 105 and client B 110 each may have an enterprise messaging system 112 located within the client's respective networks. The message processing system 135 can facilitate the sharing of messages between these enterprise messaging systems 112 by collecting and federating information about the respective enterprise messaging systems 112. Such information is stored in the database 140 of the message processing system 135. The process for sharing messages between these federated enterprise messaging systems 112 starts (905) with a source user within the client A 105 attempting to send a message to a destination user within client B 110 from a client terminal (910). A message is first sent to the enterprise messaging system 112 within the source client's firewall 125 (915). That enterprise messaging system 112 will retrieve the client and user parameters corresponding to the source user from either the message processing system 135 or from an internal database, depending upon the particular embodiment (920). The enterprise messaging system 112 then applies the policies to the source user to determine the level of permitted messaging activity (925). This step may include some or all of the policy testing and content screening processes described in Figs. 5 and 5A.

If the source user does not sufficient permission for outbound messaging, or if the message violates the content policies (930), then the message is stopped by the enterprise messaging system 112 in the source user's network (935). If, however, the source user does have sufficient permission for outbound messaging and the message does not violate the content policies, then the enterprise messaging system 112 within the source user's network forwards the outgoing message to the message processing system 135 (940). The message processing system 135 then retrieves the federation policies corresponding to the source and destination users (945). Those federation policies are then applied to the outgoing message by the message processing system 135 (950). If the federation properties permit inter-client messaging, the message processing system 135 replaces the source IP address in the message with an address for the message processing system 135 (955). The message processing system 135 then forwards the message to the destination enterprise messaging system 112 (960). The destination enterprise messaging system 112 may then apply its policies and forward the message to the appropriate destination user (965). At this point, the process for forwarding a message from one federated enterprise messaging system 112 to another is complete (970). Return messages can be sent using the same method in reverse.

While various embodiments in accordance with the principles disclosed herein have been described above, it should be understood that they have been presented by way of example only, and are not limiting. Thus, the breadth and scope of the invention(s) should not be limited by any of the above-described exemplary embodiments, but should be defined only in accordance with the claims and their equivalents issuing from this disclosure. Furthermore, the above advantages and features are provided in described embodiments, but shall not limit the application of such issued claims to processes and structures accomplishing any or all of the above advantages.

Additionally, the section headings herein are provided for consistency with the suggestions under 37 CFR 1.77 or otherwise to provide organizational cues. These headings shall not limit or characterize the invention(s) set out in any claims that may issue from this disclosure. Specifically and by way of example, although the headings refer to a "Technical Field," such claims should not be limited by the language chosen under this heading to describe the so-called technical field. Further, a description of a technology in the "Background" is not to be construed as an admission that technology is prior art to any invention(s) in this disclosure. Neither is the "Summary" to be considered as a characterization of the invention(s) set forth in issued claims. Furthermore, any reference in this disclosure to "invention" in the singular should not be used to argue that there is only a single point of novelty in this disclosure. Multiple inventions may be set forth according to the limitations of the multiple claims issuing from this disclosure, and such claims accordingly define the invention(s), and their equivalents, that are protected thereby. In all instances, the scope of such claims shall be considered on their own merits in light of this disclosure, but should not be constrained by the headings set forth herein.

## Claims

1. A method for providing synchronous messages between a user in a client network and a second messaging party, the method comprising:
providing a message processing system (135) connected to a plurality of client networks (105), a second messaging party (110, 145), and a plurality of messaging servers (155) through a public computer network (115), wherein each of the messaging servers (155) corresponds to a separate messaging protocol;
receiving a presence notifier from the client network at the message processing system, wherein the presence notifier corresponds to the user and a first messaging protocol;
retrieving parameters corresponding to the user from a database in the message processing system;
determining a level of permitted messaging activity for the user based upon the retrieved parameters;
if messaging activity for the user is permitted by the parameters, then performing the following steps a) - b);
a) replacing a user address in the user presence notifier with an address corresponding to the message processing system; and
b) forwarding the user presence notifier to a messaging server corresponding to the first messaging protocol;
receiving (510) a synchronous message at the message processing system;
retrieving (515) parameters corresponding to the synchronous message from a database in the message processing system;
testing (520) the synchronous message against the retrieved parameters to determine if the synchronous message is permitted;
collecting empirical data on synchronous messaging traffic on the public computer network;
if the synchronous message is permitted and is inbound from outside the client network, filtering the synchronous message by: extracting metadata (510A) from the synchronous message, processing (515A) the metadata with a scoring algorithm to generate a reputation score using the collected empirical data; and applying (520A) a reputation policy to the reputation score to determine if the synchronous message violates a reputation policy;
if the synchronous message is permitted by the parameters, then forwarding (565) the synchronous message to its destination.

2. A method according to claim 1, where at least one of the following applies:
a) retrieving parameters further comprises retrieving client parameters corresponding to the client network and retrieving user parameters corresponding to the user; or
b) further comprising recording the messaging event consistent with a retrieved recording parameter.

3. A method according to claim 1, further comprising:
testing the content of the messaging event consistent with a content screening parameter; and
if the messaging event fails the test, then performing a screening event selected from the group consisting of: notifying an administrator; blocking the messaging event; redacting the messaging event; queuing the messaging event for subsequent delivery; warning the sender of the messaging event; and quarantining the messaging event.

4. A method according to claim 3, wherein testing the content of the messaging event further comprises:
evaluating the actual message content for message content policy violation; and evaluating an attachment to the messaging event for a violation selected from the group consisting of: computer viruses, spyware, worms, and prohibited hyperlinks.

5. A method according to claim 1, wherein the messaging event is an outbound message from the user to the second messaging party or the messaging event is an inbound message from the second messaging party to the user.

6. A message processing system operable for processing synchronous messages between a user (130) in a client network and a second messaging party, the message processing system operable for connection to a plurality of client networks (105, 110), a second messaging party, and at a plurality of messaging servers (155) through a public computer network, wherein each of the messaging servers (155) corresponds to a separate messaging protocol, the message processing system comprising a computer system operable for performing the following steps:
receiving a presence notifier from the client network at the message processing system, wherein the presence notifier corresponds to the user and a first messaging protocol;
retrieving parameters corresponding to the user from a database in the message processing system;
determining a level of permitted messaging activity for the user based upon the retrieved parameters;
if messaging activity for the user is permitted by the parameters, then performing the following steps a) - b);
a) replacing a user address in the user presence notifier with an address corresponding to the message processing system; and
b) forwarding the user presence notifier to a messaging server corresponding to the first messaging protocol;
receiving (510) a synchronous message at the message processing system;
retrieving (515) parameters corresponding to the synchronous message from a database in the message processing system;
testing (520) the synchronous message against the retrieved parameters to determine if the synchronous message is permitted;
collecting empirical data on synchronous messaging traffic on the public computer network;
If the synchronous message is permitted and is inbound from outside the client network, filtering the synchronous message by: extracting metadata (510A) from the messaging event, processing (515A) the metadata with a scoring algorithm to generate a reputation score using the collected empirical data; and applying (520A) a reputation policy to the reputation score to determine if the messaging event violates a reputation policy;
if the synchronous message is permitted by the parameters, then forwarding (565) the synchronous message to its destination.

7. A message processing system according to claim 6 further operable for recording the messaging event consistent with a retrieved recording parameter.

8. A message processing system according to claim 6 or 7 further operable for performing the following steps:
testing the content of the messaging event consistent with a content screening parameter;
if the messaging event fails the test, then performing a screening event selected from the group consisting of: notifying an administrator; blocking the messaging event; redacting the messaging event; queuing the messaging event for subsequent delivery; warning the sender of the messaging event; and quarantining the messaging event.

9. A message processing system according to claim 8, further operable for evaluating the actual message content for message content policy violation.

10. A message processing system according to claim 9, further operable for evaluating an attachment to the messaging event for a violation selected from the group consisting of:
computer viruses, spyware, worms, and prohibited hyperlinks.

## Patentansprüche

1. Verfahren zum Bereitstellen von synchronen Nachrichten zwischen einem Benutzer in einem Client-Netzwerk und einem zweiten Nachrichtenvermittlungsteilnehmer, das Verfahren umfassend:
Bereitstellen eines Nachrichtenverarbeitungssystems (135), das mit einer Mehrzahl von Client-Netzwerken (105), einem zweiten Nachrichtenvermittlungsteilnehmer (110, 145), und einer Mehrzahl von Nachrichtenvermittlungsservern (155) mittels eines öffentlichen Computernetzwerks (115) verbunden ist, wobei jeder der Nachrichtenvermittlungsserver (155) einem gesonderten Nachrichtenvermittlungsprotokoll entspricht;
Empfangen eines Anwesenheitsbenachrichtigers von dem Client-Netzwerk im Nachrichtenverarbeitungssystem, wobei der Anwesenheitsbenachrichtiger dem Benutzer und einem ersten Nachrichtenvermittlungsprotokoll entspricht;
Abrufen von Parametern aus einer Datenbank im Nachrichtenverarbeitungssystem, die dem Benutzer entsprechen;
Bestimmen eines Niveaus von erlaubter Nachrichtenvermittlungsaktivität für den Benutzer basierend auf den abgerufenen Parametern;
falls die Nachrichtenvermittlungsaktivität für den Benutzer durch die Parameter zugelassen ist, Durchführen der folgenden Schritte a) - b):
a) Ersetzen einer Benutzeradresse in dem Anwesenheitsbenachrichtiger mit einer Adresse, die dem Nachrichtenverarbeitungssystem entspricht; und
b) Weiterleiten des Anwesenheitsbenachrichtigers des Benutzers an einen Nachrichtenvermittlungsserver, der dem ersten Nachrichtenvermittlungsprotokoll entspricht;
Empfangen (510) einer synchronen Nachricht in dem Nachrichtenverarbeitungssystems;
Abrufen (515) von Parametern, die der synchronen Nachricht entsprechen, aus einer Datenbank im Nachrichtenverarbeitungssystem;
Testen (520) der synchronen Nachricht in Bezug auf die abgerufenen Parameter, um zu bestimmen, ob die synchrone Nachricht zugelassen ist;
Sammeln von empirischen Daten über synchronen Nachrichtenvermittlungsverkehr im öffentlichen Computernetzwerk;
falls die synchrone Nachricht zugelassen ist und von außerhalb des Client-Netzwerk eingeht, Filtern der synchronen Nachricht durch: Extrahieren von Metadaten (510A) aus der synchronen Nachricht, Verarbeiten (515A) der Metadaten mit einem Bewertungsalgorithmus, um eine Rufbewertung unter Benutzung der gesammelten empirischen Daten zu erzeugen; und Anwenden (520A) einer Rufrichtlinie, auf die Rufbewertung, um zu bestimmen, ob die synchrone Nachricht eine Rufrichtlinie verletzt;
falls die synchrone Nachricht durch die Parameter zugelassen ist, Weiterleiten (565) der synchronen Nachricht an ihr Ziel.

2. Verfahren nach Anspruch 1, wobei wenigstens eines des Folgenden zutrifft:
a) Abrufen von Parametern umfasst weiter ein Abrufen von Clientparametern, die dem Client-Netzwerk entsprechen, und ein Abrufen von Benutzerparametern, die dem Benutzer entsprechen; oder
b) weiter umfassend: Aufnehmen eines Nachrichtenvermittlungsereignisses mit einem abgerufenen Aufnahmeparameter.

3. Verfahren nach Anspruch 1, weiter umfassend:
Testen des Inhalts des Nachrichtenvermittlungsereignisses übereinstimmend mit einem Inhaltsüberprüfungsparameter; und
falls das Nachrichtenvermittlungsereignis durch den Test fällt, Durchführen eines Prüfungsereignisses, das aus der Gruppe ausgewählt ist bestehend aus: Benachrichtigen eines Administrators; Blockieren des Nachrichtenvermittlungsereignisses; Redigieren des Nachrichtenvermittlungsereignisses; Aufschieben des Nachrichtenvermittlungsereignisses für eine spätere Lieferung; Warnen des Senders des Nachrichtenvermittlungsereignisses und Stellen des Nachrichtenvermittlungsereignisses unter Quarantäne.

4. Verfahren nach Anspruch 3, wobei das Testen des Inhalts des Nachrichtenvermittlungsereignisses weiter umfasst:
Auswerten des eigentlichen Nachrichteninhalts in Bezug auf Nachrichteninhalt, der eine Richtlinie verletzt; und
Auswerten eines Anhangs des Nachrichtenereignisses auf eine Verletzung, die aus der Gruppe ausgewählt ist bestehend aus: Computerviren, Spyware, Würmer und verbotener Hyperlinks.

5. Verfahren nach Anspruch 1, wobei das Nachrichtenereignis eine ausgehende Nachricht des Benutzers an einen zweiten Nachrichtenvermittlungsteilnehmer ist oder das Nachrichtenereignis eine eingehende Nachricht von einem zweiten Nachrichtenvermittlungsteilnehmer an den Benutzer ist.

6. Nachrichtenverarbeitungssystems zum Verarbeiten von synchronen Nachrichten zwischen einem Benutzer (130) in einem Client-Netzwerk und einem zweiten Nachrichtenvermittlungsteilnehmer, wobei das Nachrichtenverarbeitungssystem mit einer Mehrzahl von Client-Netzwerken (105, 110), einem zweiten Nachrichtenvermittlungsteilnehmer, und einer Mehrzahl von Nachrichtenvermittlungsservern (155) mittels eines öffentlichen Computernetzwerks verbindbar ist, wobei jeder der Nachrichtenvermittlungsserver (155) einem gesonderten Nachrichtenvermittlungsprotokoll entspricht, wobei das Nachrichtenverarbeitungssystem ein Computersystem umfasst, das dazu ausgeführt ist, die folgenden Schritte durchzuführen:
Empfangen eines Anwesenheitsbenachrichtigers von dem Client-Netzwerk im Nachrichtenverarbeitungssystem, wobei der Anwesenheitsbenachrichtiger dem Benutzer und einem ersten Nachrichtenvermittlungsprotokoll entspricht;
Abrufen von Parametern aus einer Datenbank im Nachrichtenverarbeitungssystem, die dem Benutzer entsprechen;
Bestimmen eines Niveaus von erlaubter Nachrichtenvermittlungsaktivität für den Benutzer basierend auf den abgerufenen Parametern;
falls die Nachrichtenvermittlungsaktivität für den Benutzer durch die Parameter zugelassen ist, Durchführen der folgenden Schritte a) - b):
a) Ersetzen einer Benutzeradresse in dem Anwesenheitsbenachrichtiger mit einer Adresse, die dem Nachrichtenverarbeitungssystem entspricht; und
b) Weiterleiten des Anwesenheitsbenachrichtigers des Benutzers an einen Nachrichtenvermittlungsserver, der dem ersten Nachrichtenvermittlungsprotokoll entspricht;
Empfangen (510) einer synchronen Nachricht in dem Nachrichtenverarbeitungssystems;
Abrufen (515) von Parametern, die der synchronen Nachricht entsprechen, aus einer Datenbank im Nachrichtenverarbeitungssystem;
Testen (520) der synchronen Nachricht in Bezug auf die abgerufenen Parameter, um zu bestimmen, ob die synchrone Nachricht zugelassen ist;
Sammeln von empirischen Daten über synchronen Nachrichtenvermittlungsverkehr im öffentlichen Computernetzwerk;
falls die synchrone Nachricht zugelassen ist und von außerhalb des Client-Netzwerk eingeht, Filtern der synchronen Nachricht durch: Extrahieren von Metadaten (510A) aus der synchronen Nachricht, Verarbeiten (515A) der Metadaten mit einem Bewertungsalgorithmus, um eine Rufbewertung unter Benutzung der gesammelten empirischen Daten zu erzeugen; und Anwenden (520A) einer Rufrichtlinie, auf die Rufbewertung, um zu bestimmen, ob die synchrone Nachricht eine Rufrichtlinie verletzt;
falls die synchrone Nachricht durch die Parameter zugelassen ist, Weiterleiten (565) der synchronen Nachricht an ihr Ziel.

7. Nachrichtenverarbeitungssystem nach Anspruch 6, das weiter dazu ausgeführt ist, das Nachrichtenvermittlungsereignisses mit einem abgerufenen Aufnahmeparameter aufzunehmen.

8. Nachrichtenverarbeitungssystems nach Anspruch 6 oder 7, das weiter dazu ausgeführt ist, die folgenden Schritte durchzuführen:
Testen des Inhalts des Nachrichtenvermittlungsereignisses übereinstimmend mit einem Inhaltsüberprüfungsparameter; und
falls das Nachrichtenvermittlungsereignis durch den Test fällt, Durchführen eines Prüfungsereignisses, das aus der Gruppe ausgewählt ist bestehend aus: Benachrichtigen eines Administrators; Blockieren des Nachrichtenvermittlungsereignisses; Redigieren des Nachrichtenvermittlungsereignisses; Aufschieben des Nachrichtenvermittlungsereignisses für eine spätere Lieferung; Warnen des Senders des Nachrich-tenvermittlungsereignisses und Stellen des Nachrichtenvermittlungsereignisses unter Quarantäne.

9. Nachrichtenverarbeitungssystem nach Anspruch 8, das weiter dazu ausgeführt ist, den eigentlichen Nachrichteninhalt in Bezug auf Nachrichteninhalt, der eine Richtlinie verletzt, auszuwerten.

10. Nachrichtenverarbeitungssystem nach Anspruch 9, das weiter dazu ausgeführt ist, einen Anhang des Nachrichtenereignisses auf eine Verletzung, die aus der Gruppe ausgewählt ist bestehend aus: Computerviren, Spyware, Würmer und verbotener Hyperlinks, auszuwerten.

## Revendications

1. Procédé de fourniture de messages synchrones entre un utilisateur dans un réseau client et un second correspondant de messagerie, le procédé comprenant :
- fournir un système de traitement de messages (135) connecté à une pluralité de réseaux clients (105), un second correspondant de messagerie (110, 145), et une pluralité de serveurs de messagerie (155) par le biais d'un réseau informatique commun (115), dans lequel chacun des serveurs de messagerie (155) correspond à un protocole de messagerie distinct ;
- recevoir une notification de présence du réseau client au niveau du système de traitement de messages, dans lequel la notification de présence correspond à l'utilisateur et à un premier protocole de messagerie ;
- récupérer des paramètres correspondant à l'utilisateur à partir d'une base de données dans le système de traitement de messages ;
- déterminer un niveau d'activité de messagerie autorisée pour l'utilisateur sur la base des paramètres récupérés ;
- si l'activité de messagerie pour l'utilisateur est autorisée par les paramètres, alors exécuter les étapes suivantes a) - b) :
a) remplacer une adresse d'utilisateur dans la notification de présence d'utilisateur par une adresse correspondant au système de traitement de messages ; et
b) transmettre la notification de présence d'utilisateur à un serveur de messagerie correspondant au premier protocole de messagerie ;
- recevoir (510) un message synchrone au niveau du système de traitement de messages ;
- récupérer (515) des paramètres correspondant au message synchrone à partir d'une base de données dans le système de traitement de messages ;
- tester (520) le message synchrone en fonction des paramètres récupérés pour déterminer si le message synchrone est autorisé ;
- collecter des données empiriques sur le trafic de messagerie synchrone sur le réseau informatique public ;
- si le message synchrone est autorisé et est entrant à partir de l'extérieur du réseau client, filtrer le message synchrone en : extrayant des métadonnées (510A) du message synchrone, traitant (515A) les métadonnées avec un algorithme de notation afin de générer un score de réputation en utilisant les données empiriques collectées ; et appliquer (520A) une politique de réputation au score de réputation afin de déterminer si le message synchrone viole une politique de réputation ;
- si le message synchrone est autorisé par les paramètres, alors transmettre (565) le message synchrone vers sa destination.

2. Procédé selon la revendication 1, dans lequel au moins l'un de ce qui suit s'applique :
a) récupérer des paramètres comprend en outre récupérer des paramètres de client correspondant au réseau client et récupérer des paramètres d'utilisateur correspondant à l'utilisateur, ou
b) comprenant en outre enregistrer l'événement de messagerie compatible avec un paramètre d'enregistrement récupéré.

3. Procédé selon la revendication 1, comprenant en outre :
- tester le contenu de l'évènement de messagerie compatible avec un paramètre de filtrage de contenu ; et
- si l'événement de messagerie ne satisfait pas au test, alors exécuter un événement de filtrage choisi parmi le groupe constitué par : une notification à un administrateur ; le blocage de l'événement de messagerie ; la modification de l'événement de messagerie ; la mise en file d'attente de l'événement de messagerie pour une remise ultérieure ; l'avertissement de l'expéditeur de l'événement de messagerie ; et la mise en quarantaine de l'événement de messagerie.

4. Procédé selon la revendication 3, dans lequel tester le contenu de l'événement de messagerie comprend en outre :
- évaluer le contenu réel du message pour la violation de la politique de contenu de message ; et
- évaluer une pièce jointe de l'événement de messagerie pour une violation choisie dans le groupe constitué par les virus informatiques, les logiciels espions, les vers, et les hyperliens interdits.

5. Procédé selon la revendication 1, dans lequel l'événement de messagerie est un message sortant de l'utilisateur à destination du second correspondant de messagerie ou l'événement de messagerie est un message entrant du second correspondant de messagerie à destination de l'utilisateur.

6. Système de traitement de messages servant à traiter des messages synchrones entre un utilisateur (130) dans une réseau client et un second correspondant de messagerie, le système de traitement de messages servant à la connexion à une pluralité de réseaux clients (105, 110), un second correspondant de messagerie, et au niveau d'une pluralité de serveurs de messagerie (155) par l'intermédiaire d'un réseau informatique public, dans lequel chacun des serveurs de messagerie (155) correspond à un protocole de messagerie distinct, le système de traitement de messages comprenant un système informatique servant à effectuer les étapes suivantes :
- recevoir une notification de présence du réseau client au niveau du système de traitement de messages, dans lequel la notification de présence correspond à l'utilisateur et à un premier protocole de messagerie ;
- récupérer des paramètres correspondant à l'utilisateur à partir d'une base de données dans le système de traitement de messages ;
- déterminer un niveau d'activité de messagerie autorisée pour l'utilisateur sur la base des paramètres récupérés ;
- si l'activité de messagerie pour l'utilisateur est autorisée par les paramètres, alors effectuer les étapes suivantes a) - b) :
a) remplacer une adresse d'utilisateur dans la notification de présence d'utilisateur par une adresse correspondant au système de traitement de messages ; et
b) transmettre la notification de présence d'utilisateur à un serveur de messagerie correspondant au premier protocole de messagerie ;
- recevoir (510) un message synchrone au niveau du système de traitement de messages ;
- récupérer (515) des paramètres correspondant au message synchrone à partir d'une base de données dans le système de traitement de messages ;
- tester (520) le message synchrone en fonction des paramètres récupérés afin de déterminer si le message synchrone est autorisé ;
- collecter des données empiriques sur le trafic de messagerie synchrone sur le réseau informatique public ;
- si le message synchrone est autorisé et est entrant à partir de l'extérieur du réseau client, filtrer le message synchrone en : extrayant des métadonnées (510A) de l'événement de messagerie, traitant (515A) les métadonnées avec un algorithme de notation afin de générer un score de réputation en utilisant les données empiriques collectées ; et appliquer (520A) une politique de réputation au score de réputation afin de déterminer si l'événement de messagerie viole une politique de réputation ;
- si le message synchrone est autorisé par les paramètres, alors transmettre (565) le message synchrone vers sa destination.

7. Système de traitement de messages selon la revendication 6, servant en outre à enregistrer l'événement de messagerie compatible avec un paramètre d'enregistrement récupéré.

8. Système de traitement de messages selon la revendication 6 ou 7, servant en outre à exécuter les étapes suivantes :
- tester le contenu de l'évènement de messagerie compatible avec un paramètre de filtrage de contenu ;
- si l'événement de messagerie ne satisfait pas au test, alors exécuter un événement de filtrage choisi parmi le groupe constitué par une notification à un administrateur ; le blocage de l'événement de messagerie ; la modification de l'événement de messagerie ; la mise en file d'attente de l'événement de messagerie pour une remise ultérieure ; l'avertissement de l'expéditeur de l'événement de messagerie ; et la mise en quarantaine de l'événement de messagerie.

9. Système de traitement de messages selon la revendication 8, servant en outre à évaluer le contenu réel du message pour la violation de la politique de contenu de message.

10. Système de traitement de messages selon la revendication 9, servant en outre à évaluer une pièce jointe de l'événement de messagerie pour une violation choisie dans le groupe constitué par : les virus informatiques, les logiciels espions, les vers et les hyperliens interdits.
